# EUROPEAN PATENT APPLICATION

(11) **EP 1 009 112 A2**
(43) Date of publication of application: **14.06.2000**
(21) Application number: 99203628.5
(22) Date of filing: 03.11.1999
(51) Int. Cl.: H04B 10/24, H04B 10/17

(54) **Duplex Optical transmission system**

(30) Priority: 07.12.1998 GB 9826878
(71) Applicant: Nortel Networks Corporation, Montreal, Quebec H2Y 3Y4 (CA)
(72) Inventor: Jolley, Nigel Edward, Bishop's Storford, Hertfordshire CM210AU (GB); Whiteaway, James Edward Andrew, Sawbridgeworth, Hertfordshire CM21 0AU (GB); Davis, Fiona, Bishops Stortford, Hertfordshire CM234HQ (GB)
(74) Representative: Laurence, Simon French

(57) **Abstract**

In a duplex WDM transmission system, an optical amplifier that uses different amplification paths (22, 25) for amplification of the different directions of signal propagation requires filters (34, 37) to keep the loop gain less than unity for all wavelengths within the amplification waveband. Simple high-pass and low-pass filters can be used when red channels are used for signals propagating in one direction, and blue ones for those propagating in the other. Comb filters are, however, required for use in any optical amplifier employed such a transmission system using any form of interleaved form of channel allocation in place of the red/blue allocation. Examples of such amplifiers are described, these amplifiers having flitters possessing an arrayed waveguide grating structure (44).

## Description

### Background to the Invention

Hitherto, the standard regime of channel assignment for channels in a WDM duplex optical transmission system that includes one or more optical amplifiers is a regime in which all the signal channels exceeding a specific wavelength (the red channels) are employed for signal propagation in one direction, while all the other signal channels (the blue channels) are employed for signal propagation in the other direction. (For the purposes of this specification the term 'duplex' is defined to mean that signal traffic is able to propagate simultaneously in both directions along a common transmission path, but that within the or each optical amplifier the signals propagating in the two directions are caused to propagate in physically separated transmission paths.) Each optical amplifier has a circulator at each end, these being arranged so that signals propagating in one direction through the amplifier are amplified separately from those propagating through it in the other direction. A high degree of optical isolation between the two amplification paths in the amplifier is necessary in order to maintain the loop gain less than unity for all wavelengths within the amplification band, and so prevent the occurrence of laser action. To this end, the blue amplification path may commence with a band edge filter to reject the red channels, while the red amplification path commences with a band edge filter to reject the blue channels. In considering isolation, due regard must be paid not only to imperfections in the performance of the isolators themselves, but also to the effects of back-reflections and back-scattering occurring in the transmission path beyond the two ends of the amplifier.

An alternative channel assignment has been proposed in the specification of European Patent Application Serial No. 98305371.1, a channel assignment in which the channels are interleaved so that the propagation direction for each channel is the opposite of that of the next higher wavelength channel, and also of that of the next lower wavelength channel. A primary advantage of such channel assignment is that it doubles the channel separation of co-propagating channels. This makes it easier to multiplex and demultiplex co-propagating channels, and reduces problems of cross-talk and four-wave mixing. A disadvantage is however the fact that simple band edge filters can no longer be used to boost the isolation between the two amplification paths of an optical amplifier.

A further alternative channel assignment has also been proposed in the above-referenced specification, one in which the channels are interleaved in wavelength-adjacent pairs. Both members of each wavelength-adjacent pair of channels propagate in the same direction, and the interleaving is such that the propagation direction for each wavelength-adjacent pair of channels is the opposite of that of the next higher wavelength-adjacent, and also of that of the next lower wavelength-adjacent pair of channels. In this instance the amelioration of adverse four-wave mixing effects results without there being a doubling in the channel separation of co-propagating channels, and arises because the first four-wave mixing product occurs outside of the band of any other channel propagating in the same direction. This interleaving also has the disadvantage of the fact that simple band edge filters can no longer be used to boost the isolation between the two amplification paths of an optical amplifier. When intending to distinguish this interleaving from that described in the preceding paragraph, this interleaving will be referred to as paired interleaving, while that of the preceding paragraph will be referred to a single interleaving.

### Summary of the Invention

The present invention is directed to the obtaining of good isolation between the two amplification paths of an optical amplifier for use in a transmission system employing interleaved channel assignment.

According to a first aspect of the present invention there is provided a duplex WDM transmission system in which signal channels are assigned on a regular frequency grid with an interleaved distribution of propagation directions such that the direction of propagation assigned to each channel in the frequency grid is the opposite of that assigned to the two channels respectively assigned to the next higher and next lower frequencies in the grid, which transmission system includes at least one optical amplifier having a pair of input/output ports optically coupled with each other by means of a pair of circulators that are interconnected by forward and return optical paths optically in parallel, which paths include optical amplifiers and optical filters, wherein the optical filters comprise two-port arrayed waveguide grating comb filter structures, each with a free spectral range matched to twice the frequency spacing of the frequency grid.

According to a second aspect of the present invention there is provided a duplex WDM transmission system in which signal channels are assigned on a regular frequency grid in co-propagating wavelength-adjacent pairs with an interleaved distribution of propagation directions such that the direction of propagation assigned to each wavelength-adjacent pair of channels in the frequency grid is the opposite of that assigned to the two pairs of wavelength-adjacent channels respectively assigned to the next higher and next lower pairs of frequencies in the grid, which transmission system includes at least one optical amplifier having a pair of input/output ports optically coupled with each other by means of a pair of circulators that are interconnected by forward and return optical paths optically in parallel, which paths include optical amplifiers and optical filters, wherein the optical filters comprise two-port arrayed waveguide grating comb filter structures, each with a free spectral range matched to four times the frequency spacing of the frequency grid.

According to a third aspect of the present invention there is provided an optical amplifier having a pair of input/output ports optically coupled with each other by means of a pair of circulators that are interconnected by forward and return optical paths optically in parallel, which paths include optical amplifiers and optical filters, wherein the optical filters comprise two-port arrayed waveguide grating comb filter structures, and wherein the comb filter structures of the two paths have teeth that are interleaved in frequency substantially symmetrically.

It may be noted that these optical amplifiers employ optical filters having a construction possessing many features in common with one of the stages of two-stage multiplexer /demultiplexers described in United States patent No. 5,680,490. However, it should be recognised that the two devices are performing quite distinct functions: the one being concerned to prevent the transmission of optical power in certain regions of the spectrum, the other being ideally a lossless device for physically separating, or combining, signals of different wavelengths. Operational requirements for the two types of device are also not compatible insofar as the multiplexer /demultiplexer device must have at least three ports, comprising a single input port and at least two output ports, or at least two input ports and a single output port; whereas the filter device has only two ports, a single input port and a single output port. To provide the filter with any additional ports, even if they were left entirely unused, would be significantly detrimental because such ports would contribute unnecessary and undesirable additional optical loss. By way of example, in respect of a specific design of bandpass-flattened arrayed waveguide grating comb filter whose array consists of twelve waveguides providing a free spectral range of 200GHz (i.e. for use in an interleaved system in which the channel frequencies are on a 100GHz grid) calculations indicate that the provision of an extra port (i.e. changing from a 2-port device to a 3-port one) would augment the loss by approximately 0.5dB. In this context it is to be noted that though a single increment of 0.5dB may not appear very significant, each amplifier may have four arrayed waveguide grating filters (two for each direction), and so, if there were five amplifiers in cascade in the transmission system, the additional loss would aggregate to 5dB.

### Brief Description of the Drawings

Figure 1 schematically depicts a WDM duplex optical transmission system that includes one or more optical amplifiers,
Figure 2 schematically depicts a prior art amplifier for a WDM duplex optical transmission system,
Figure 3 schematically depicts an amplifier for a WDM duplex optical transmission system embodying the invention in a preferred form, and
Figure 4 schematically depicts an arrayed waveguide grating filter employed in the amplifier of Figure 3.

### Detailed Description of Preferred Embodiments

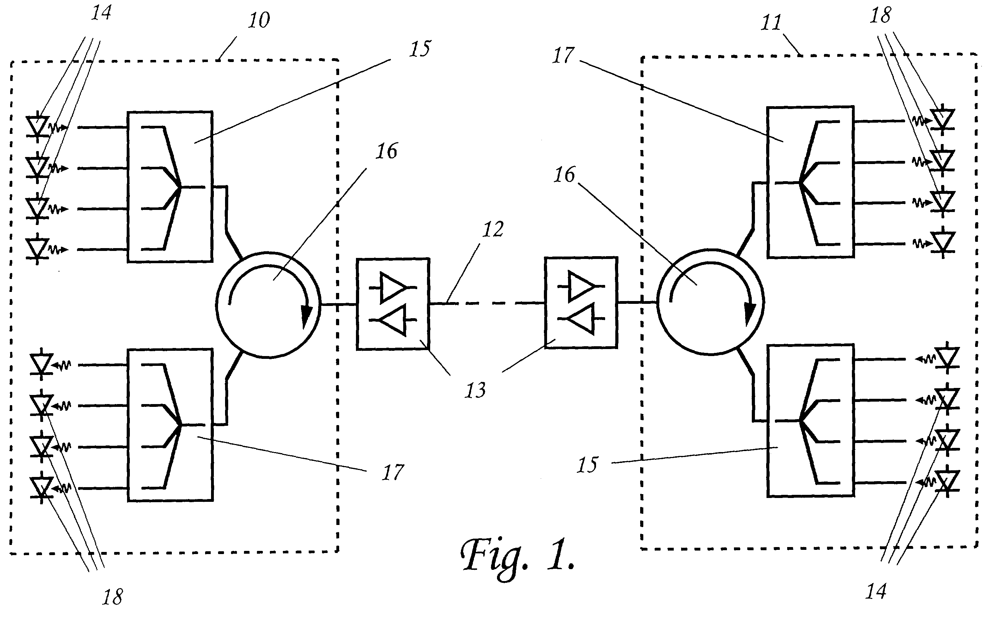

Figure 1 schematically depicts a WDM duplex transmission system having transceivers 10 and 11 located at opposite ends of a transmission path 12 that includes one or more optical amplifiers 13. Each transceiver has a set of optical transmitters 14 that launch their signals at different wavelengths into the transmission path 12 by way of a wavelength multiplexer 15 and a circulator 16. At the transceiver at the far end of the transmission path, these multiplexed signals are launched by its circulator into a wavelength demultiplexer 17. This demultiplexes the multiplexed signals and routes the demultiplexed signals, on an individual basis, to the individual members of a set of receivers 18.

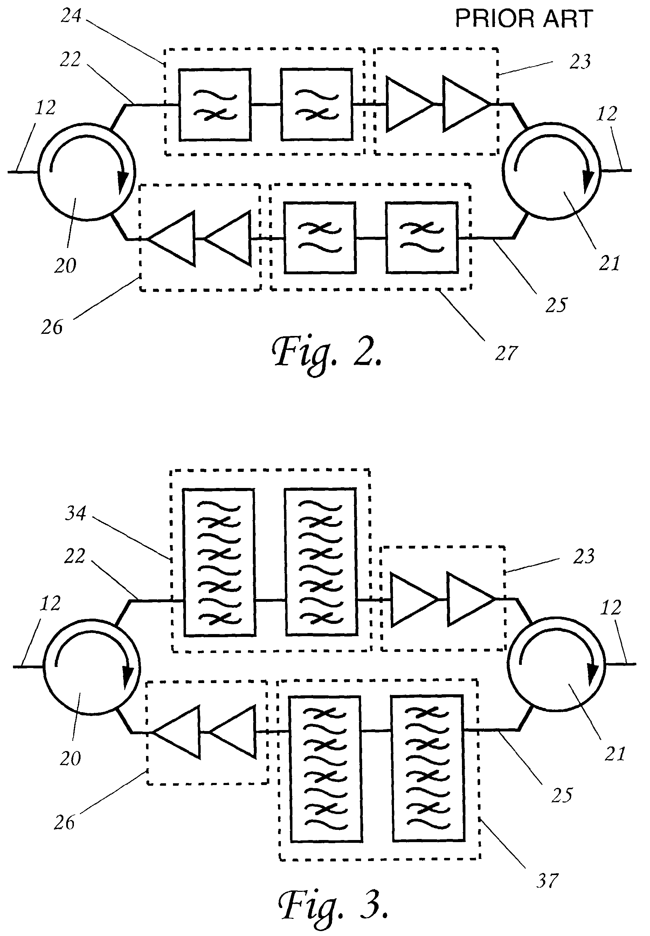

Figure 2 schematically depicts a prior art configuration of amplifier suitable for use as an amplifier 13 of Figure 1 in the circumstances in which the allocation of channels for duplex transmission is such that red channels are used for transmission in one direction, while blue channels are used for transmission in the other direction. At each end of the amplifier there is a circulator 20, 21. Light that is launched into the amplifier from the transmission path 12 by the way of circulator 20, is directed by way of optical pathway 22 to circulator 21, and from there back into transmission path 12. Optical pathway 22 includes an optical amplifier 23 and a high-pass filter 24. Both the amplifier 23 and the filter 24 may be formed in two or more parts, Figure 2 particularly illustrating the instance in which both filters are formed in two parts. The ordering of the parts, or of the component parts, is not necessarily as specifically illustrated. Different ordering of these parts may be desirable to suit different applications. For instance, with one particular configuration of two-part amplifier, the amplification provided by the first stage may be such that both parts of a two-part filter are best sited between the first and second parts of the amplifier. In another configuration, the amplification of the first stage may be such that the best configuration is to have this part of the amplifier located between the two parts of the filter. The high-pass filter 24 has its cut-off between the red and blue bands. It therefore allows the transmission of the blue channels, but blocks the transmission of the red channels.

Optically in parallel with the optical pathway 22 between the two circulators 20 and 21 is a second optical pathway 25. This includes an optical amplifier 26 corresponding to the optical amplifier 23 of the first pathway 22. It also includes an optical filter 27 corresponding to the optical filter 24 of the first pathway, but in this instance, whereas filter 24 is a high-pass filter, filter 27 is a low-pass filter that allows the transmission of the red channels while blocking the blue channels.

Figure 3 schematically depicts a configuration of amplifier suitable for use as an amplifier 13 of Figure 1 in circumstances in which the allocation of channels is an interleaved one according to the teachings of the present invention. This amplifier is distinguished from that of Figure 3 only in that the high-pass and low-pass optical filters 24 and 27 of the amplifier of Figure 2 are, in the amplifier of Figure 3, replaced by comb filters 34 and 37. Elsewhere in Figure 3, the integers that are common to both amplifiers are provided with the same reference numerals as their counterparts in the amplifier of Figure 2. The comb filters 34 and 37 are specifically designed for an amplifier operating in an interleaved WDM duplex transmission system in which the channel frequencies are aligned to the frequencies of a uniformly spaced frequency grid, in one particular example a 100GHz grid. Numbering these channels in ascending (or descending) frequency order, the comb filters 34 for operating in a transmission system employing single interleaving are constructed to allow the transmission of the odd-numbered channels while blocking the even-numbered channels, and correspondingly the comb filters 37 are constructed to allow the transmission of the even-numbered channels while blocking the odd-numbered channels. For operating in a transmission system employing paired interleaving, the comb filters 34 are constructed to allow the transmission of the odd-numbered pairs of wavelength adjacent channels while blocking the even-numbered pairs, and correspondingly the comb filters 37 are constructed to allow the transmission of the even-numbered pairs while blocking the odd-numbered pairs.

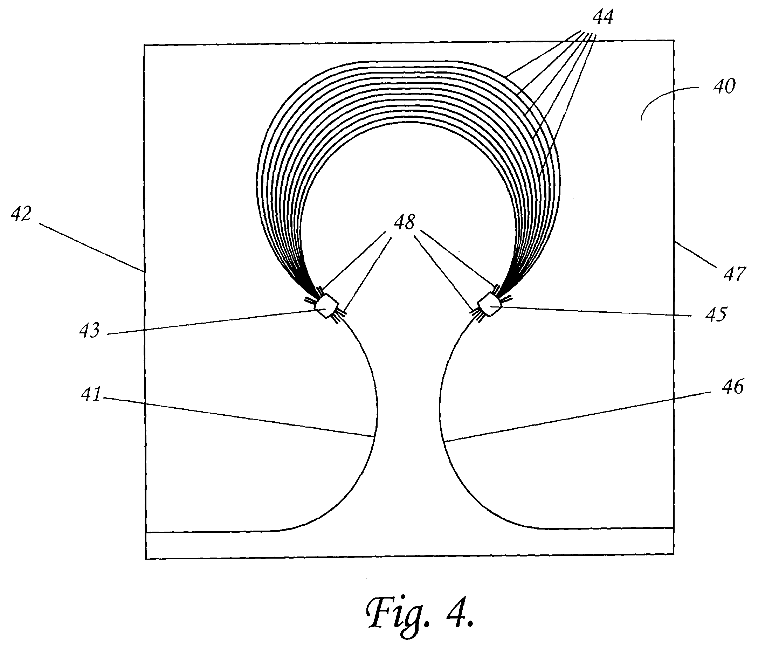

Figure 4 schematically depicts the layout of an arrayed waveguide grating filter which, either alone or in tandem with one or more others, constitute a filter 34 or 37 of the amplifier of Figure 3. It is for use in an amplifier designed for operation in an interleaved WDM duplex transmission system having signal channels with wavelengths in the region of 1.5µm allocated on 100GHz frequency grid. In many respects the basic structure of the filter is similar to that of arrayed waveguide grating multiplexer/demultiplexers based on a design described by C Dragone et al., in the paper entitled, 'Integrated Optics N x N Multiplexer on Silicon', IEEE Photonics Technology Letters, Vol. 3, No. 10, October 1991, pages 896-9. It differs principally in that the filter has only one input port and one output port whereas the Dragone device has at least several input ports and several output ports. The device of Figure 4 is an integrated optics device constructed in a silica on silicon die 40, a portion of a single crystal silicon wafer. It has a first single single-mode waveguide 41 extending from a side edge 42 of the die 40 to a first star coupler 43. (The waveguiding in a star coupler is distinguished from that in the waveguides in that in the star coupler there is no structure to provide any effective waveguiding action in any direction lying in the plane of the die 40.) From the far side of this star coupler radiates an array of single mode waveguides 44. These waveguides converge at the far end of the array, where they meet a second star coupler 45. Typically the array may consist of twelve waveguides, and each has an optical path length (product of physical path length with effective refractive index) longer than its nearest inside neighbour by a constant amount that determines the free spectral range of the filter. At the far side of the second star coupler 45 is a second single-mode waveguide 46 extending from this star coupler to a side edge 47 of the die 40. The array of optical waveguides 44 and the individual waveguides 41 and 46 may be flanked by short stub lengths 48 of waveguide provided to reduce edge effects at the two star couplers 43 and 45.

The difference in optical path length between adjacent waveguides 44 of the array determines the free spectral range of the comb filter, i.e. the pitch of its teeth. The absolute positioning, in frequency terms, of those teeth is determined by the absolute values of those optical path lengths. The comb filter is designed so that these absolute values shall lie in the vicinity of the required absolute values. Then, making use of thermal effects in integrated optic device waveguides, the temperature of the die is adjusted, for instance by means of a Peltier effect device (not shown), to bring the absolute values of optical path length encountered in practice into close registry with the required absolute values.

Typically, but not necessarily, individual waveguides of the arrayed waveguide grating filter may, in order to reduce their optical loss, be provided with small lateral offsets (not illustrated) wherever there is a junction between straight and curved portions of the waveguide. Additionally such a comb filter may include a structure designed to flatten the bandpass of each tooth of the comb. One way of achieving this bandpass flattening is to arrange for the first waveguide 41 not to be single mode over its entire length from side edge 42 to star coupler 43, but to include a short multimode section (not illustrated) where the waveguide abuts the star coupler 43. This short multimode section functions as multimode interference coupler, its length being chosen in relation to the modal dispersion between its zeroth and second order modes to effect a flattening of the wavefront entering the star coupler. For a further description of how such waveguide offsets and multimode sections function, reference may be made respectively to the paper by J Chen et al. entitled, 'A Proposed Design for Ultralow-Loss Waveguide Grating Routers', IEEE Photonics Technology Letters, Vol. 10, No. 3 pp 379-381, and to the paper by M Amersfoot et al. entitled, 'Passband broadening of integrated arrayed waveguide grating filters using multimode interference couplers', Electronics letters, Vol. 32, No. 5 pp 449-451. A more complex way of providing passband flattening, but a way that possesses less intrinsic loss than the above referenced multimode interference coupler approach, involves the use of a tandem arrangement of two harmonically related (e.g. 2:1) free spectral range waveguide array gratings that are optically coupled in the manner described in International Application WO 98/04944.

## Claims

1. A duplex WDM transmission system in which signal channels are assigned on a regular frequency grid with a distribution of propagation directions characterised in that the direction of propagation assigned to each channel in the frequency grid is the opposite of that assigned to the two channels respectively assigned to the next higher and next lower frequencies in the grid, which transmission system includes at least one optical amplifier having a pair of input/output ports (12) optically coupled with each other by means of a pair of circulators (20, 21) that are interconnected by forward and return optical paths (22, 25) optically in parallel, which paths include optical amplifiers (23, 26) and optical filters (34, 37), wherein the optical filters comprise two-port arrayed waveguide grating comb filter structures (44), each with a free spectral range matched to twice the frequency spacing of the frequency grid.

2. A duplex WDM transmission system in which signal channels are assigned on a regular frequency grid characterised in that the signal channels are assigned in co-propagating wavelength-adjacent pairs with an interleaved distribution of propagation directions such that the direction of propagation assigned to each wavelength-adjacent pair of channels in the frequency grid is the opposite of that assigned to the two pairs of wavelength-adjacent channels respectively assigned to the next higher and next lower pairs of frequencies in the grid, which transmission system includes at least one optical amplifier having a pair of input/output ports (12) optically coupled with each other by means of a pair of circulators (20, 21) that are interconnected by forward and return optical paths (22, 25) optically in parallel, which paths include optical amplifiers (23, 26) and optical filters (34, 37), wherein the optical filters comprise two-port arrayed waveguide grating comb filter structures (44), each with a free spectral range matched to four times the frequency spacing of the frequency grid.

3. An optical amplifier having an input port (12) optically coupled with an output port (12) by means of a pair of circulators (20, 21) that are interconnected by forward and return optical paths (22, 25) optically in parallel, which paths include optical amplifiers (23, 26) and optical filters (34, 37), wherein the optical filters comprise two-port arrayed waveguide grating comb filter structures (44), and wherein the comb filter structures of the two paths have teeth that are interleaved in frequency substantially symmetrically.
